# EUROPEAN PATENT APPLICATION

(11) **EP 0 913 084 A1**
(43) Date of publication of application: **06.05.1999**
(21) Application number: 98203710.3
(22) Date of filing: 03.11.1998
(51) Int. Cl.: A01K 21/00, A01K 29/00

(54) **System for promoting heat and estrus**

(30) Priority: 03.11.1997 NL 1007419
(71) Applicant: N.V. Nederlandsche Apparatenfabriek NEDAP, NL-7141 DE Groenlo (NL)
(72) Inventor: Roosenschoon, Pieter Lieuwe, 7104 BC Winterswijk-Meddo (NL)
(74) Representative: Ottevangers, Sietse Ulbe

(57) **Abstract**

The invention relates to a system by which estrus of female animals (cows and the like) can be induced or can be stimulated, with the main objective of allowing the animal to conceive better and earlier. In this system, use is made of a device which spreads specific pheromones (odors) in the air. The regular exposure of animals to certain pheromones induces heat in the animals. In addition, as a result of these pheromones, the conception rate after service is higher and less embryonal death occurs. The system can be optimally controlled by a farm management computer.

## Description

This invention relates to a system for the early induction of heat in at least one animal. This invention further relates to a method for the early induction of heat in at least one animal.

In stock farming, it is of major importance that the female animals (e.g. cows) conceive on time (in cows, on average 60 to 80 days after calving). To realize this, it is important that soon after having their young (after calving, in the case of cows), the animals regularly exhibit estrus again, that is, come on heat again. In addition, it is essential for the farmer to monitor the proper moment of insemination. Factors also playing an important role in achieving the status "conceived" are the failed conception rate and embryonal death rate. On farms where it is a problem to make the animals conceive timely again, relatively much damage is sustained as a result of this suboptimal fertility.

Research has shown that animals that are in the period of heat produce certain odors (pheromones), so that group members are stimulated to ruttish behavior, such as fawning, laying the head on the tail base, and mounting. Also, in pigs, it is known that the odor of a boar stimulates the estrous behavior of sows.

The scientific literature, for instance the article of Sokolov *et al*., reports the positive effect of exposing cattle to the boar androstenone pheromone and/or urine coming from bulls, on the time of heat onset, and on the number of inseminations needed for each gestation. It also appeared in this study that the rate of embryonal death in the group of treated animals was substantially lower. An article of Dehnhard *et al*. also reports the correlation between the increased production of pheromones and the estrus of cows. In addition, a study of Kukyshkina *et al*. reports an interval shortened by 29 days between the time of calving and the next insemination in cows exposed to bull urine and/or the litter from a bull shed, compared with animals that were not contacted with these pheromones.

The object of the present invention is to induce estrus, or heat, in animals which are in the period of the reproductive cycle where, from the point of view of optimum fertility, service, or insemination, should take place. The system according to the invention is characterized in that the system comprises at least one space in which at least one animal is located and at least one odor spreading device for supplying a heat-inducing odorous substance to the space. By providing the space where the animals are running at large with one or more odor spreading device(s) that introduce heat-stimulating pheromones into the air continuously or at certain intervals, heat is induced in the animals at an earlier time.

The odor spreading device can consist of a vessel containing the odorous substance, in combination with a manually or automatically, for instance electronically and/or pneumatically, operable mist sprayer or atomizer by which the odorous substance is introduced into the space.

The odorous substance may originate, for instance, from estrous mucus of estrous animals. What can also be used is the odor of bull urine, which may or may not be boiled, or the odorous substance secreted by a boar.

Preferably, the odorous substance is applied to a medium providing for prolonged emission of the desired odor. It is also possible for the liquid containing the odor in question to be atomized directly in the space under high pressure. Another method is to evaporate the odor liquid, for instance ultrasonically, in the space where the animals are located. Further, it is possible to utilize a propellant by which, with the aid of, for instance, a venturi tube, the odor liquid is atomized in the space.

In the simplest form, a farmer can operate the atomizer manually a number of times every twenty-four hours. In a more advanced form, the atomizer is operated by signals coming from a management computer. By means of this equipment, the amount of odorous substance that is introduced into the air can be controlled more uniformly and at the appropriate times.

It is also possible to gradually raise the concentration over a certain period, depending on the number of animals, or the reproductive status of these animals. It is further possible, if a plurality of units are mounted in the space where the animals are located, to control the sequential order in which, as well as the moment at which, the atomizers are operated by means of the management computer referred to.

The moment of spreading, as well as the concentration of the odorous substance, can be determined on the basis of various heat-related data present in the management system. Examples include the time of calving, the calving course, the so-called body condition score, the milk production and the health status. Further, the system may be self-learning as regards the optimum moment and the concentration of the odorous substance to be spread in the space, by making use of past results.

The system can be made of stand-alone design, that is, there is no coupling with any other equipment in the farm. It is also possible to couple the system to the above-mentioned farm management computer, such that animals that are to conceive are individually contacted with the heat-inducing odorous substance, for instance during the intake of concentrated feed in a concentrate station, or during milking in the milking parlor.

For this purpose, it is necessary that the odor spreading device is mounted at the position in question and is operated at the moment when an animal of interest is located at this position.

The system can be designed to be simply displaceable.

The method according to the invention is characterized in that, using at least one odor spreading device, a heat-inducing odorous substance is supplied to a space in which at least one animal is located.

The invention further relates to an apparatus which, with the exception of the space referred to, comprises the system according to the invention.

The invention will presently be further explained with reference to the drawing. In the drawing:
Fig. 1 shows a first embodiment of a system according to the invention; and
Fig. 2 shows a second embodiment of a system according to the invention.

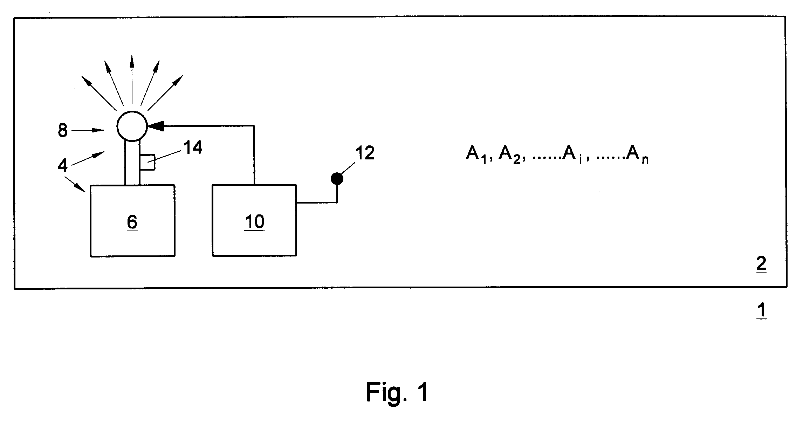

The system for the early induction of heat in at least one animal as shown in Fig. 1 is designated by reference numeral 1. The system comprises at least one space 2, in which at least one animal Aᵢ is located. In this example, the space 2 is designed as the space of a shed. In this example, the space 2 comprises n-animals A₁, A₂,..Aᵢ, ..Aₙ (i = 1, 2,..n), where n is a natural number greater than 1.

The system further comprises an odor spreading device 4 for supplying a heat-inducing odorous substance to the space 2. In this example, the odor spreading device 4 comprises a vessel 6, in which the odorous substance is contained, as well as a metering device 8, connected to the vessel, for metering odorous substance from the vessel 6 to the space 2. In this example, the space 2 is arranged for keeping a plurality of animals Aᵢ, (i = 1,2..-n), so that the odorous substance, in use, is inhaled by a plurality of animals.

The system further comprises a computer 10 which operates the metering device 8 of the odor spreading device 4. The odor spreading device 4 may be arranged such that, in use, it continuously supplies odorous substance to the space. It is also possible, however, that the odor spreading device is arranged for periodically supplying odorous substance to the space. In the latter case, the computer 10, for instance, can be used for controlling the metering device 8. The computer 10 then determines at what moment odorous substance is supplied to the space 2. The computer 10 can also determine the amount of odorous substance that is supplied to the space 2. In particular, the computer 10 comprises a sensor 12 which determines the concentration of the amount of odorous substance in the space 2. The computer 10 can then control the metering device 8 such that a predetermined concentration in the space 2 is achieved. If the concentration of the odorous substance falls below a predetermined value, the computer 10 controls the metering device 8 of the odor spreading device 4 for dispensing odorous substances from the vessel 6 to the space 2, until the concentration of the odorous substance in the space 2 reaches the predetermined value.

The system can also be arranged for increasing and/or decreasing the concentration of odorous substance in the space 2, for instance depending on the reproductive cycle of the animals. Again, this can be carried out under the control of the computer 10.

It is also possible, however, that the odor spreading device is arranged to be operated manually. In that case, the odor spreading device further comprises, for instance, a pump 14 which can be operated manually.

In this example, the odor spreading device 4 is arranged for atomizing the odorous substance, whether or not dissolved in the liquid, for supplying the odorous substance to the space. Accordingly, the odorous substance contained in the vessel may or may not be dissolved in a liquid. The metering device 8 may be arranged for atomizing the liquid.

It is also possible, however, that the odor spreading device 4 is arranged for ultrasonically atomizing the odorous substance, which may or may not be dissolved in a liquid. In that case, the metering device 8 is arranged, in a manner known per se, for ultrasonic atomization.

Additionally, it is possible that the odor spreading device is arranged for evaporating the odorous substance, which may or may not be dissolved in a liquid, for supplying the odorous substance to the space 2. In that case, the metering device 8 is arranged, in a manner known per se, for evaporating the odorous substance, which may or may not be dissolved in a liquid.

It is also possible that a propellant is contained in the vessel 6. The metering device 8 may then be designed as a valve which can be opened for allowing the odorous substance to escape from the vessel 6. In that case, the metering device 8 may comprise a pneumatically operated valve, known per se. It is also possible, however, that in that case the metering device 8 is designed for an electrically operable valve, known per se.

The odorous substance may, for instance, comprise the odor of estrous mucus. In case the animals Aᵢ are cows, the odorous substance can comprise the odor of bull urine, which may or may not be boiled. In case the animals Aᵢ are pigs, the odorous substance may comprise, for instance, the odor of a boar.

Preferably, the odor spreading device 4 is of mobile design. It is here possible that the odor spreading device 4 is physically connected to the computer 10, so that the combination of the odor spreading device 4 and the computer 10 permit of mobile displacement as a whole.

The system according to the invention may further comprise a farm management computer, here likewise indicated by reference numeral 10. The farm management computer is a computer known per se, which, in a manner known per se, is used for stock management of the animals. The farm management computer 10 may be arranged for processing data of the animals Aᵢ on an individual basis. The farm management computer may comprise, for instance, data on the milk production of the animals, among which, for instance, the amount of milk produced by the individual animals. The computer may also comprise heat-related data, such as a time of calving, a calving course, a body condition score, and a health status of the animals. These data may also be stored for each individual animal. The computer 10 may be arranged to process these data in combination to determine at what time and/or in what amount odorous substance is to be supplied to the space 2. By determining the amount of odorous substance to be dispensed, the concentration of the odorous substance in the space 2 can also be regulated.

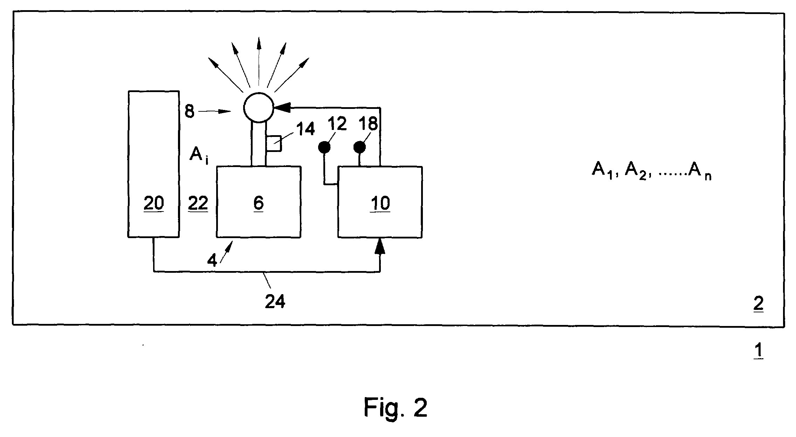

Fig. 2 shows a further elaboration of the system according to Fig. 1. Parts corresponding to Fig. 1 are provided with the same reference numerals. The system according to Fig. 2 additionally comprises a device 20, known per se, for feeding and/or milking the animals. The device 20 is arranged at a position 22, known per se. In use, an animal A₁ will go to the position 22 to be milked, or to be fed. The stock management computer 10 controls the device 20 for milking the animal Aᵢ, or for feeding it. The system 1 further comprises an identification device 18, known per se, for determining the identity of the animal Aᵢ located at position 22. For this purpose, the animal Aᵢ may be fitted with an ear tag, known per se, incorporating a transponder which comprises an identification code of the animal Aᵢ. The identification device 18 is arranged for generating an electromagnetic interrogation field. Under the influence of the interrogation field, the ear tag of the animals Aᵢ transmits the identification code, which is thereupon received by the identification device 18 again and is supplied to the stock management computer 10. Accordingly, the stock management computer 10 knows the identity of the animal Aᵢ located at the position 22. On the basis of this identity, the stock management computer 10 controls the metering device 8, so that odorous substance is supplied at position 22 in the space 2. Accordingly, depending on the identity of the animal and tailored to the characteristic properties of the animal, odorous substance is supplied at position 22 in the space 2. The supply of the odorous substance, i.e., the amount of the odorous substance that is supplied, is determined on the basis of the heat-related data, known per se, present in the farm management computer 10, such as the time of calving, a calving course, a body condition score, a milk production and a health status of the individual animal in question.

It holds for both the system according to Fig. 1 and the system according to Fig. 2 that the computer 10 can be of self-learning design for determining the optimum moment at which the odorous substance is to be supplied to the space and for determining the optimum concentration of the odorous substance in the space.

If the device 20 consists of a milking robot, information about the amount of milk drawn from an animal can be supplied to the computer 10 via a line 24. On the basis of this information, in a manner entirely analogous to that discussed hereinbefore, the supply of odorous substance to the space 2 can be controlled. If in the system according to Fig. 2 a new animal Aⱼ (j = 1,2,..,n) goes to the position 22, the animal is signaled with the aid of the identification device 18, which event determines the moment at which odorous substance is released in the space 2 at the position 22. The amount of odorous substance is then determined partly on the basis of the identity of the animal Aⱼ in question, i.e., on the basis of heat-related data of the Aⱼ in question.

The invention is not in any way limited to the embodiments outlined hereinbefore. Thus, the system may comprise a plurality of odor spreading devices 4, as described hereinbefore. These odor spreading devices 4 can each be coupled to the computer 10. Thus, it is possible, in the shed space 2, to arrange an odor spreading device 4 at every milking position where a milking robot 20 is located. Such variants are all understood to fall within the scope of the invention.

## Claims

1. A system for the early induction of heat in at least one animal, characterized in that the system comprises at least one space in which at least one animal is located and at least one odor spreading device for supplying a heat-inducing odorous substance to the space.

2. A system according to claim 1, characterized in that the space is arranged for keeping a plurality of animals, so that the odorous substance, in use, is inhaled by a plurality of animals.

3. A system according to claim 1 or 2, characterized in that the odor spreading device is arranged for continuously supplying the odorous substance to the space.

4. A system according to claim 1 or 2, characterized in that the odor spreading device is arranged for periodically supplying the odorous substance to the space.

5. A system according to any one of the preceding claims, characterized in that the system is arranged for increasing and/or decreasing the concentration of odorous substance in the space, for instance depending on the reproductive cycle of the animals.

6. A system according to any one of the preceding claims, characterized in that the odor spreading device is arranged to be operated manually.

7. A system according to any one of the preceding claims, characterized in that the system further comprises a computer for automatically controlling the odor spreading device.

8. A system according to any one of the preceding claims, characterized in that the odor spreading device is arranged for atomizing the odorous substance, which may or may not be dissolved in a liquid, for supplying the odorous substance to the space.

9. A system according to claim 8, characterized in that the odor spreading device is arranged for ultrasonically atomizing the odorous substance which may or may not be dissolved in a liquid.

10. A system according to any one of the preceding claims, characterized in that the odor spreading device is arranged for evaporating the odorous substance, which may or may not be dissolved in a liquid, for supplying the odorous substance to the space.

11. A system according to any one of the preceding claims, characterized in that the odor spreading device is arranged for supplying the odorous substance, which may or may not be dissolved in a liquid, to the space using a propellant.

12. A system according to any one of the preceding claims, characterized in that the odor spreading device comprises a pneumatically operated valve for supplying the odorous substance to the space.

13. A system according to any one of the preceding claims, characterized in that the odor spreading device comprises an electrically operated valve for supplying the odorous substance to the space.

14. A system according to any one of the preceding claims, characterized in that the odorous substance comprises the odor of estrous mucus.

15. A system according to any one of the preceding claims, characterized in that the odorous substance comprises the odor of bull urine, which may or may not be boiled.

16. A system according to any one of the preceding claims, characterized in that the odorous substance comprises the odor of a boar.

17. A system according to any one of the preceding claims, characterized in that the odor spreading device is of mobile design.

18. A system according to any one of the preceding claims, characterized in that the system further comprises a farm management computer for supplying the odorous substance to individual animals at a predetermined position, such as a feeding station or milking parlor.

19. A system according to claim 18, characterized in that the system further comprises identification means for identifying the animals, while odorous substance is supplied by the odor spreading device depending on the identity of the animal located at the predetermined position.

20. A system according to any one of the preceding claims 1-17, characterized in that the system further comprises a farm management computer controlling the odor spreading device for determining the moment at which the odorous substance is supplied to the space and/or the concentration of the odorous substance in the space on the basis of heat-related data, known per se, present in the farm management computer, such as a time of calving, a calving course, a body condition score, a milk production and a health status.

21. A system according to claim 20, characterized in that the computer is of self-learning design for determining the optimum moment at which the odorous substance is supplied to the space and the optimum concentration of the odorous substance in the space.

22. Apparatus which, with the exception of said space, comprises the system according to any one of the preceding claims.

23. A method for the early induction of heat in at least one animal, characterized in that using at least one odor spreading device a heat-inducing odorous substance is supplied to a space in which at least one animal is located.

24. A method according to claim 23, characterized in that a plurality of animals are brought into the space for simultaneously supplying the odorous substance to the plurality of animals by inhalation.

25. A method according to claim 23 or 24, characterized in that the odorous substance, using the odor spreading device, is supplied continuously to the space.

26. A method according to claim 23 or 24, characterized in that the odorous substance, using the odor spreading device, is supplied periodically to the space.

27. A method according to any one of the preceding claims 23-26, characterized in that the concentration of odorous substance in the space is regulated using an odor spreading device, for instance depending on the reproductive cycle of at least one animal.

28. A method according to any one of the preceding claims 23-27, characterized in that an odorous substance is used which comprises the odor of estrous mucus.

29. A method according to any one of the preceding claims 23-28, characterized in that an odorous substance is used which comprises the odor of estrous mucus.

30. A method according to any one of the preceding claims 23-29, characterized in that an odorous substance is used which comprises the odor of bull urine, which may or may not be boiled.

31. A method according to any one of the preceding claims 23-30, characterized in that an odorous substance is used which comprises the odor of a boar.

32. A method according to any one of the preceding claims 23-31, characterized in that the moment of supply of the odorous substance to the space and/or the concentration of the odorous substance in the space is determined on the basis of heat-related data such as the time of calving, a calving course, a body condition score, a milk production and a health status.
